# FASCICULE DE BREVET EUROPEEN

(11) **EP 1 454 802 B1**
(45) Date de publication et mention de la délivrance du brevet: **19.11.2008**
(21) Numéro de dépôt: 04290586.9
(22) Date de dépôt: 04.03.2004
(51) Int. Cl.: B60R 21/20, B62D 1/04

(54) **Coussin gonflable fixe sur volant**
Lenkradmontierter Luftsack
Airbag fixed to steering wheel

(30) Priorité: 05.03.2003 FR 0302696
(43) Date de publication de la demande: 08.09.2004
(73) Titulaire: SC2N, 78180 Montigny-le-Bretonneux (FR)
(72) Inventeur: Hallet, Michel, 14320 Clinchamps-Sur-Orne (FR)
(74) Mandataire: Texier, Christian

(56) Documents cités:
- EP-A- 0 414 245
- EP-A- 1 273 501
- DE-A- 19 904 321
- DE-C- 19 634 102
- FR-A- 2 823 024

## Description

### DOMAINE TECHNIQUE GENERAL.

La présente invention concerne les systèmes électromécaniques de véhicule comportant un dispositif de commande de direction monté libre en rotation sur un support de direction et en rupture mécanique avec les moyens permettant de diriger le véhicule.

Plus précisément, elle concerne un système électromécanique de véhicule comportant un dispositif de commande de direction monté libre en rotation sur un support de direction comportant un cousin gonflable de sécurité monté sur le dispositif de commande et fixe par rapport au support de direction.

### ETAT DE L'ART.

La notion de sécurité est de plus en plus importante dans les véhicules, par exemple du type automobile.

C'est pour cette raison que de plus en plus de véhicules comportent un coussin gonflable de sécurité (ou "Airbag" selon la terminologie anglo-saxonne) disposé sur le dispositif de commande de direction par exemple. Le but d'un tel coussin gonflable de sécurité est d'être gonflé lors d'un éventuel accident et de protéger le conducteur d'un choc contre le dispositif de commande de direction. Différents moyens de commande et de gonflement du coussin de sécurité sont connus, et comportent par exemple des moyens de déclenchement du type pyrotechnique.

Plusieurs géométries de fixation du coussin gonflable par rapport au dispositif de commande de direction (par exemple le volant) peuvent être possibles.

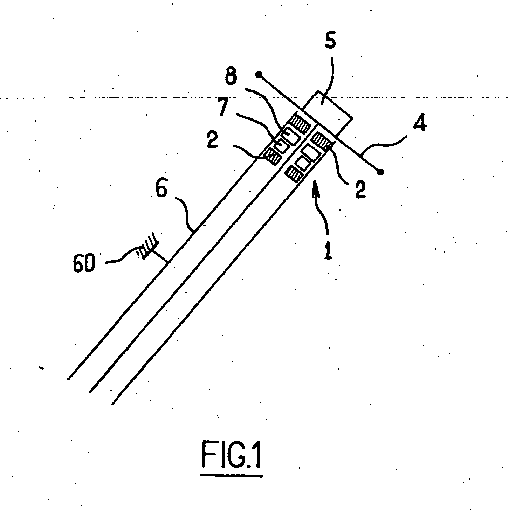

Une première solution consiste à disposer un coussin gonflable mobile par rapport à la colonne de direction du véhicule. Ce cas est représenté schématiquement à la figure 1. Selon la figure 1, le haut 1 de colonne de direction 6, liée au véhicule 60, comporte un coussin gonflable 5 lié au dispositif 4 de commande de direction, à savoir le volant. Un utilisateur du véhicule manie donc le volant 4 solidaire d'un arbre 3, libre en rotation à l'intérieur de la colonne 6 de direction grâce à des roulements 2 situés entre l'arbre 3 et la colonne de direction 6. Plusieurs dispositifs sont également montés entre d'une part l'arbre mobile 3 commandant par exemple les roues du véhicule et d'autre part la colonne de direction 6. Par exemple, de tels dispositifs peuvent comporter un module 7 de retour d'efforts ou d'assistance à la conduite (pour une manipulation plus aisée du volant 4 par l'utilisateur) et/ou un module 8 de commutations comportant par exemple des moyens aptes à commander les différents feux du véhicule et/ou des indicateurs de changement de direction et/ou des moyens aptes à nettoyer un pare-brise de véhicule.

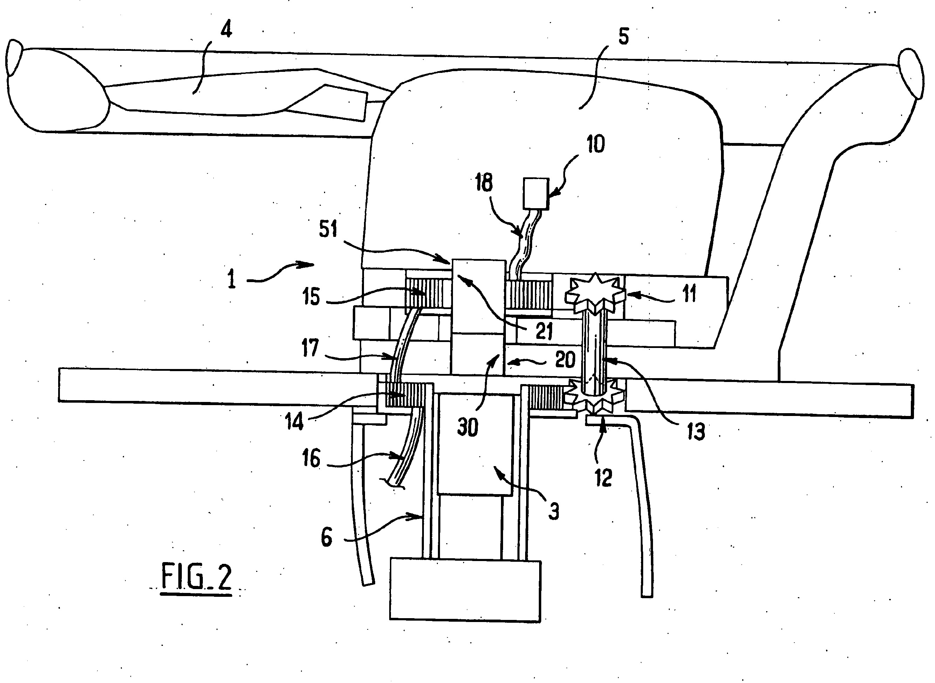

Une deuxième solution consiste à monter le coussin gonflable fixe par rapport à la colonne de direction. Un mode de réalisation d'une telle solution est représenté schématiquement à la figure 2. On aperçoit sur cette figure 2 une disposition classique de haut de colonne de direction 6 comprenant un coussin fixe 5, un volant 4, un axe de colonne 3. Dans cette configuration, la jante du volant 4 est reliée en rotation à l'axe de colonne 3 en 20/30, par tous moyens mécaniques appropriés, tels que par exemple des cannelures complémentaires, des systèmes vis/écrou, etc. Le coussin 5 est monté libre de rotation en 51 sur un axe 21 de la jante du volant. Pour rendre le coussin 5 fixe, on utilise généralement un mécanisme comprenant un axe 13 parallèle à l'axe de rotation du volant 4 porté libre de rotation sur lui-même par la jante du volant 4, lequel axe 13 est muni de deux pignons 11 et 12, liés entre eux par rotation par cet axe 13, et qui engrènent respectivement sur une denture située sur le coussin fixe 5 et sur une denture située sur le tube de la colonne 6. Lorsque la jante du volant 4 est entraînée à rotation, l'axe 13 monté en satellite sur le volant 4, suit la rotation du volant 4. Il en est de même pour les 2 pignons 11 et 12, lesquels tournent à la même vitesse de sorte que le pignon 12 lié à la colonne fixe impose une position fixe du coussin 5.

La figure 2 montre également que des moyens 10 permettent le gonflement du coussin gonflable 5 en cas de danger pour l'utilisateur. La liaison électrique entre des moyens détectant un danger et les moyens de gonflement du coussin gonflable 5 est représentée schématiquement par les contacteurs électriques 14 et 15 et les liaisons électriques référencées par 16, 17 et 18.

Par ailleurs, il existe des systèmes électromécaniques de véhicule dans lesquels le dispositif de commande de direction est en rupture mécanique par rapport à au moins un élément du véhicule qui dirige effectivement le véhicule, c'est-à-dire le fait tourner sur sa trajectoire. Autrement dit, dans les exemples des figures 1 et 2 de l'état de la technique, le volant est mécaniquement lié aux roues par l'intermédiaire de pièces mécaniques. Le développement de la technologie a permis d'envisager que le dispositif de commande ne soit plus relié mécaniquement aux éléments dirigeant le véhicule, mais que les informations fonction de la rotation du dispositif de commande soient transmises électriquement à des éléments commandant les roues du véhicule. Voir par exemple le document DE 196 34 102 C1.

On souhaite adapter un coussin gonflable sur un tel système électromécanique.

Les solutions de montage de coussins gonflables selon l'état de la technique présentent des inconvénients.

En effet, dans le cas d'un coussin mobile, c'est-à-dire lié au volant, le gonflement du coussin n'est pas optimal et peut provoquer des problèmes de sécurité de l'utilisateur du fait de la rotation du coussin gonflable par rapport à la tête de l'utilisateur.

Dans le cas d'un coussin fixe, c'est-à-dire fixe par rapport au support ou à la colonne de direction, les pièces mécaniques intermédiaires entre d'une part la colonne de direction et d'autre part le coussin fixe sont complexes à monter. En effet, le système mécanique comporte beaucoup de pièces. De plus, du fait du nombre de pièces également, il est onéreux. Enfin, les pignons et les satellites de montage du coussin fixe engendrent des vibrations, qui peuvent provoquer des problèmes de sécurité pour l'utilisateur lors du gonflement du coussin.

### PRESENTATION DE L'INVENTION.

L'invention propose de pallier ces inconvénients.

Un but de l'invention est de proposer un coussin gonflable fixe par rapport à un support de direction dans le cas d'un système électromécanique de commande de direction. Dans ce cas, il n'y a pas de liaison mécanique entre le dispositif de commande de direction et les éléments de commande des moyens dirigeant effectivement le véhicule sur sa trajectoire.

Un autre but de l'invention est de proposer un système électromécanique de commande de direction comportant un coussin gonflable fixe, simple et comportant peu de pièces mécaniques. Le système électromécanique selon l'invention est peu onéreux et est simple de montage du fait du faible nombre de pièces mécaniques.

Un autre but de l'invention est de proposer un système électromécanique dont le coussin fixe subit peu de vibrations mécaniques.

Enfin un autre but de l'invention est de proposer un système électromécanique de commande de direction fiable.

A cet effet, l'invention propose un système électromécanique de véhicule comportant un dispositif de commande de direction monté libre en rotation sur un support de direction et sollicitant un capteur adapté pour fournir une information électrique fonction de la rotation du dispositif de commande par rapport au support et pour fournir cette information à au moins un élément du véhicule en rupture mécanique avec le support et le dispositif de commande, caractérisé en ce qu'il comporte un coussin gonflable de sécurité monté sur le dispositif de commande et fixé sur le support de direction et qu'il comporte en outre des moyens de retour d'efforts aptes à appliquer des efforts sur le dispositif de commande, et des moyens formant bloc de commutations, le capteur, les moyens de retour d'efforts et les moyens formant bloc de commutation étant empilés sur une pièce de sollicitation solidaire du dispositif de commande.

L'invention est avantageusement complétée par les caractéristiques suivantes, prises seules ou en une quelconque de leur combinaison techniquement possible :
- le coussin gonflable est solidaire d'une extrémité d'un arbre, l'autre extrémité de l'arbre étant solidaire d'une pièce fixée sur le support, le dispositif de commande étant solidaire d'une pièce de sollicitation du capteur montée en rotation autour de l'arbre ;
- la pièce de sollicitation comporte une forme sensiblement tubulaire, au moins un roulement étant apte à permettre la rotation entre l'arbre et la pièce de sollicitation ;
- l'extrémité de l'arbre opposée au coussin gonflable comporte un alésage complémentaire de moyens de fixation sur la pièce fixée sur le support ;
- le bloc de commutations est apte à commander différents feux du véhicule et/ou des indicateurs de changement de direction du véhicule et/ou des moyens aptes à nettoyer un pare brise du véhicule ;
- le bloc de commande comporte une forme solidaire de la pièce de sollicitation apte à commander la position d'un levier de changement de direction en fonction des mouvements du dispositif de commande de direction ;
- le support comporte des moyens aptes à régler la position, par rapport au support, de l'axe de rotation du dispositif de commande de direction ; et
- le dispositif de commande de direction est un volant pris en sandwich entre le coussin gonflable de sécurité et le support de commande de direction.

### PRESENTATION DES FIGURES.

D'autres caractéristiques, buts et avantages de l'invention ressortiront de la description qui suit, qui est purement illustrative et non limitative, et qui doit être lue en regard des dessins annexés sur lesquels :
- la figure 1, déjà commentée, présente schématiquement un mode de réalisation d'un coussin gonflable mobile selon l'état de la technique;
- la figure 2, déjà commentée représente schématiquement un mode de réalisation d'un coussin gonflable fixe selon l'état technique;
- la figure 3 représente un premier mode de réalisation d'un système électromécanique selon l'invention;
- la figure 4 représente schématiquement un deuxième mode de réalisation d'un système électromécanique selon l'invention;
- la figure 5 représente schématiquement un premier procédé de montage d'un système selon la figure 4;
- la figure 6 représente un deuxième procédé de montage d'un système selon la figure 4.

### DESCRIPTION DETAILLEE DE L'INVENTION.

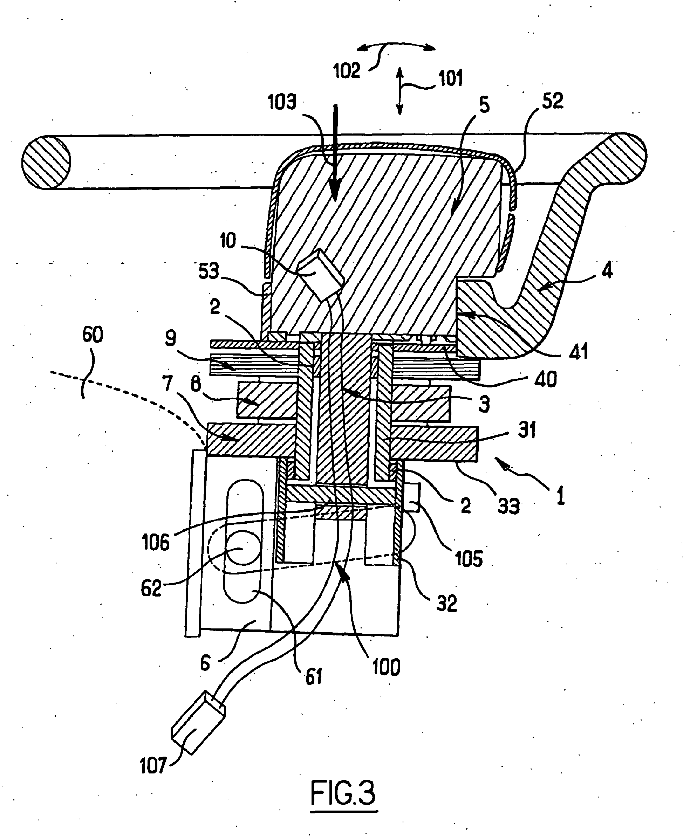

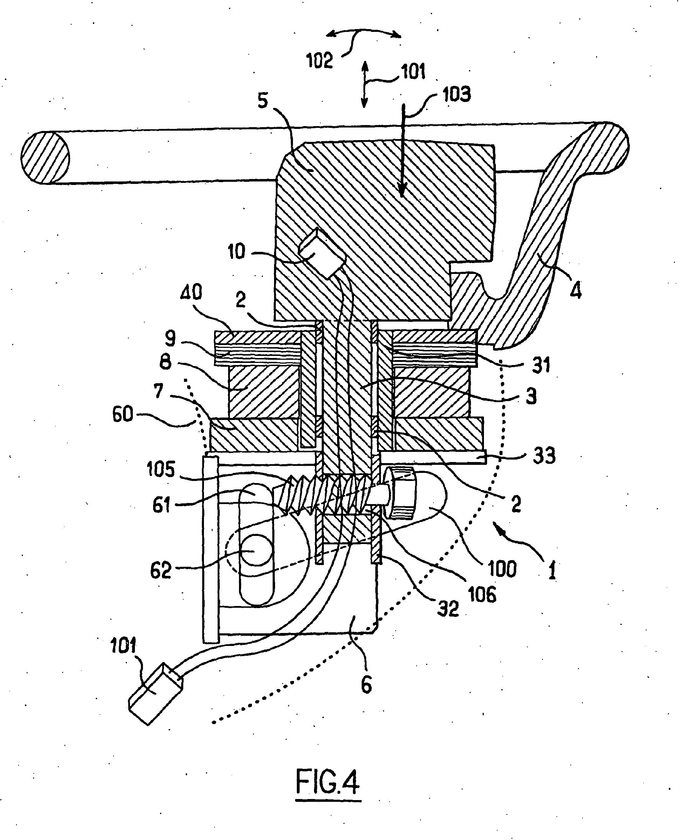

Les figures 3 et 4 représentent schématiquement deux modes de réalisation d'un système électromécanique de commande de direction entièrement électronisé, c'est-à-dire avec une rupture mécanique entre d'une part un support 6 d'un dispositif 4 de commande de direction et d'autre part les moyens d'orientation du véhicule, par exemple les roues. Ainsi, le système électromécanique du haut de colonne de direction 1, représenté sur les figures 3 et 4, commande au moins un élément guidant par exemple les roues du véhicule, cet élément étant situé hors du périmètre des figures 3 et 4. Chaque élément peut-être une commande de pivot des roues ou d'autres moyens de direction du véhicule, par exemple par un moteur électrique implanté sur la crémaillère ou tout système, comme par exemple des vérins actifs implantés directement sur les fusées des roues.

Le haut de colonne 1 comporte principalement en son sommet un dispositif de commande de direction 4. Le dispositif de commande de direction 4 comporte par exemple un volant ou tout autre moyen de commande permettant de donner une information de direction par rapport au support 6 de direction. Le support 6 de direction est situé dans la partie inférieure du système de commande. Le support de direction 6 est fixe par rapport à un élément du véhicule 60, par exemple le tableau de bord.

Le mouvement du dispositif de commande (une rotation dans le cas d'un volant) sollicite un capteur 9 adapté pour fournir une information électrique fonction de la rotation du dispositif 4 de commande par rapport au support 6. L'information électrique est envoyée à au moins un élément du véhicule en rupture mécanique avec le support 6 et le dispositif 4 de commande pour commander la direction le véhicule.

Le système 1 comporte un module de protection d'un conducteur du véhicule. Le module de protection comporte par exemple un coussin gonflable de sécurité 5. Le coussin gonflable de sécurité 5 est monté sur le dispositif de commande 4 et fixé sur le support de direction 6. Le coussin gonflable 5 est mobile par rapport au dispositif de commande 4, c'est-à-dire par rapport à la jante du volant 4 dans le cas d'un véhicule automobile.

Le coussin gonflable 5 est par exemple solidaire d'une extrémité d'un arbre 3, l'autre extrémité de l'arbre 3 étant solidaire d'une pièce 32 fixée sur le support 6. La pièce 32 a une forme sensiblement tubulaire. Plusieurs moyens permettent de fixer l'extrémité de l'arbre 3 et la pièce 32. Ils seront décrits plus en détails dans la suite de la description. L'arbre 3 a préférentiellement une symétrie de révolution.

La pièce 32 est solidaire du support 6 mais peut se déplacer angulairement et longitudinalement par rapport au support, comme l'indiquent les flèches 101 et 102. En effet, un levier de commande 100, relié d'une part au support 6 et d'autre part à la pièce 32, peut être actionné par l'utilisateur afin de permettre un réglage de position du volant 4 en angle et en hauteur, pour permettre un confort de conduite à un utilisateur. A cet effet, le levier de commande 100 comporte des moyens permettant de déplacer la pièce 32 angulairement et longitudinalement, ainsi que des moyens 62 complémentaires d'une lumière 61 pratiquée dans les moyens formant support 6 et permettant un déplacement longitudinal selon la flèche 101.

Le volant 4 est également capable de colapsabilité, comme l'indique la flèche 103, grâce à des moyens non représentés sur les figures 3 et 4. La colapsabilité du volant 4 est nécessaire lors du déclenchement du gonflement du coussin gonflable 5. Elle s'effectue de façon synchronisée avec le gonflement du coussin 5 pour une meilleure sécurité du conducteur.

La partie inférieure la plus proche du support 6 de la jante du volant 4 est solidaire d'un plateau 40, sensiblement circulaire. Le plateau 40 comporte un alésage en son centre, afin de laisser un espace suffisant au passage de l'arbre 3, qui est lui fixe par rapport au support 6. Le plateau 40 s'étend sensiblement selon un plan perpendiculaire à l'arbre 3.

L'alésage du plateau 40 est lui-même solidaire d'une pièce de sollicitation 31. La pièce de sollicitation est de forme sensiblement tubulaire et entoure une partie de l'arbre 3. L'axe longitudinal de la pièce 31 et celui de l'arbre 3 sont sensiblement confondus.

Bien entendu, le plateau 40 et la pièce de sollicitation 31 peuvent n'être qu'une seule pièce. De même, le volant 4, le plateau 40 et la pièce de sollicitation peuvent ne former qu'une seule pièce.

L'ensemble formé par la jante du volant 4, le plateau 40 et la pièce de sollicitation 31 est donc libre en rotation par rapport au support 6, autour de l'arbre 3. Des roulements 2 montés entre l'ensemble 4-40-31 et l'arbre 3 permettent la libre rotation de cet ensemble par rapport à l'arbre 3.

Plusieurs modes de réalisation du système sont possibles, et diffèrent par exemple par la place des roulements 2 dans le système.

Ainsi, selon un premier mode de réalisation sur la figure 3, un premier roulement 2 est situé entre d'une part la paroi intérieure de la pièce de sollicitation 31 et d'autre part la paroi extérieure de l'arbre 3, dans une région proche du coussin gonflable 5. Un deuxième roulement 2 est situé entre d'une part la paroi intérieure de la pièce 32 et d'autre part la paroi extérieure de la pièce 31. Ainsi le roulement 2 situé près du coussin gonflable 5 comporte une bague intérieure fixe et solidaire de l'arbre 3 et une bague extérieure mobile et solidaire de la pièce de sollicitation 31. Le deuxième roulement 2 possède quant à lui une bague intérieure mobile solidaire de la pièce de sollicitation 31 et une bague extérieure fixe solidaire de la pièce 32.

Un deuxième mode de réalisation est visible sur la figure 4. Selon ce mode de réalisation, les deux roulements 2 sont situés entre la pièce de sollicitation 31 et l'arbre 3. Ils possèdent donc tous les deux une bague intérieure fixe solidaire de l'arbre 3 et une bague extérieure mobile tournant avec la pièce de sollicitation 31.

Un capteur d'angle 9 est monté sur la paroi extérieure de la pièce de sollicitation 31. Avantageusement, un bloc 8 de commutations et des moyens de retour d'efforts 7 sont également montés sur la paroi extérieure de la pièce de sollicitation. Les moyens 7, 8 et 9 sont par exemple empilés les uns sur les autres autour de la pièce 31. Le capteur d'angle 9, le bloc de commutations 8 et les moyens de retour d'efforts 7 comportent tous au moins une partie solidaire de la pièce de sollicitation 31. La pièce de sollicitation 31 sollicite ainsi dans son mouvement au moins une partie du capteur 9, du bloc de commutations et des moyens de retour d'efforts.

Les moyens 7 de retour d'efforts sont aptes à appliquer des efforts sur le dispositif de commande 4 pour que le conducteur garde des sensations de conduite similaires à celles d'une transmission mécanique classique. Ce retour d'efforts est possible grâce au fait que les moyens 7 comportent au moins une partie solidaire de la pièce de sollicitation 31 solidaire de la jante du volant 4.

Le bloc 8 de commutations est apte à commander les différents feux du véhicule et/ou des indicateurs du changement de véhicule et/ou des moyens apte à nettoyer un pare-brise de véhicule par exemple. Dans le cas où le bloc 8 est apte à commander des indicateurs de changement de direction du véhicule, au moins une forme du bloc 8 doit être solidaire de la pièce de sollicitation 31, afin de permettre de rétablir un levier de changement de direction dans sa position initiale en fonction du mouvement du dispositif de commande de direction 4. En effet, un utilisateur indique un changement de direction en enclenchant un levier de changement de direction, tourne le volant 4 pour changer de direction. Le levier doit pouvoir revenir à sa position initiale sans action particulière de l'utilisateur. C'est cette forme 8 solidaire de la pièce 31 qui permet ce retour de levier de changement de direction.

Le capteur d'angle 9 doit être solidaire de la pièce 31 afin de suivre les mouvements de la jante du volant 4. Le capteur d'effort va fournir une information électrique fonction de ce déplacement en rotation pour guider le véhicule sans lien mécanique entre le volant et les moyens permettant de diriger le véhicule.

Une extrémité de l'arbre 3 est solidaire du coussin gonflable 5. L'autre extrémité de l'arbre 3 est rendue solidaire de la pièce 32 grâce à des moyens de fixation classiques et facilement industrialisables. Par exemple, l'extrémité de l'arbre 3 comporte un alésage 106 d'extension longitudinale perpendiculaire à l'arbre 3. L'alésage 106 est complémentaire de moyens de fixation 105 traversant la pièce 32 et venant s'insérer dans l'alésage 106, afin de solidariser l'arbre 3 et la pièce 32. Par exemple, les moyens de fixation 105 peuvent être une goupille comme sur la figure 3, ou une vis comme l'indique la figure 4. D'autres moyens de fixation de l'arbre 3 sur la pièce 32 sont également possibles, comme par exemple un circlips venant s'insérer entre l'extérieur de l'arbre 3 et l'intérieur de la pièce 32.

Les modes de réalisation représentés aux figures 3 et 4 permettent au système électromécanique de comporter un système 10 de déclenchement de gonflement du coussin 5 extrêmement simple. En effet, la liaison électrique entre les systèmes de déclenchement 10 et un module 101 de détection d'accidents ou de dangers est extrêmement simple. Il suffit de faire passer les moyens de connexion électrique entre le module 101 et le système 10 à l'intérieur de l'arbre 3. Les moyens de déclenchement comportent par exemple des moyens pyrotechniques. Il n'est pas besoin de système compliqué comme celui de l'état de la technique représenté à la figure 2.

De plus, le coussin gonflable 5 est fixe par rapport au véhicule et au support 6, ce qui assure une parfaite sécurité de gonflement du coussin 5. De plus, le fait que le coussin 5 soit lié au support 6 directement par l'arbre 3 et non pas par l'intermédiaire de pignons évite les vibrations qui peuvent engendrer un manque de sécurité et de fiabilité.

De plus, le nombre de pièces est réduit, ce qui diminue le coût de production et facilite le montage du système.

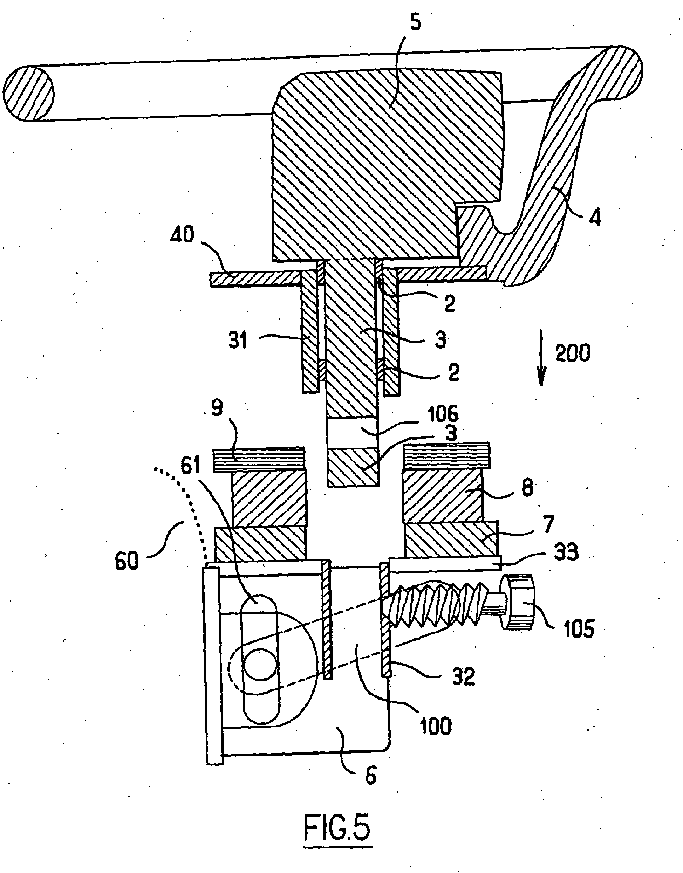

Plusieurs procédés de montage du dispositif sont possibles. Selon un premier procédé de montage visible à la figure 5, l'ensemble des moyens 7, 8 et 9 sont empilés les uns sur les autres et fixés sur la pièce 32 sur le support 6. Par exemple la pièce 32 comporte un plateau 33, venu de matière sur la pièce 32 ou rapporté sur la pièce 32, dont l'extension est sensiblement perpendiculaire à l'axe longitudinal de la pièce 32. L'ensemble des éléments 7, 8 et 9 sont donc montés sur le plateau 33.

L'ensemble composé du dispositif de commande 4, du plateau 40 et de la pièce de sollicitation 31 est monté en rotation autour de l'arbre 3 grâce aux roulements 2. Le coussin gonflable 5 peut être monté sur l'extrémité de l'arbre 3 à ce moment, ou à un moment ultérieur. L'ensemble volant 4 et arbre 3 est donc ensuite monté sur l'ensemble 7, 8 et 9 déjà monté sur le support 6 suivant la flèche 200. Les moyens 105 comportant par exemple une vis sont solidarisés de l'alésage 106 de l'arbre 3. Le système est monté.

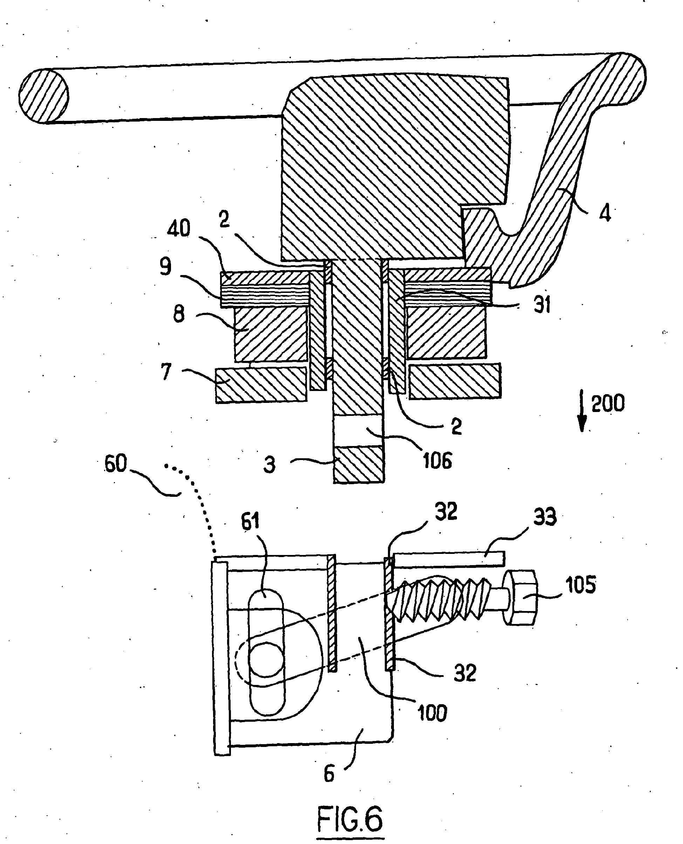

Un deuxième procédé de montage est représenté à la figure 6. Selon ce procédé, l'ensemble des moyens 7, 8 et 9 est directement monté sur la pièce de sollicitation 31 solidaire du plateau 40 du dispositif de commande 4, monté en rotation grâce aux roulements 2 autour de l'arbre 3.

L'ensemble est ensuite monté dans la pièce 32 selon la direction 200 comme un module complet. Le module complet est ensuite fixé sur la pièce 32 grâce à des moyens de fixation 105, comportant par exemple une vis complémentaire de l'alésage 106 pratiqué dans l'arbre 3.

Ainsi, dans les deux procédés de montage, quand tout est assemblé, l'arbre 3 solidaire du coussin gonflable 5 solidaire du support 6 lui-même solidaire du tableau de bord 60 du véhicule. La partie mobile formée de la jante du volant 4, du plateau 40 et de la pièce de sollicitation 31 est prise en sandwich entre le coussin gonflable 5 et le support 6, sans fixation particulière.

On comprend alors les avantages d'un tel système, puisqu'il permet la suppression des liaisons électriques rotatives, la suppression de fixation spécifique des parties mobiles et une facilité d'assemblage.

## Revendications

1. Système électromécanique de véhicule comportant un dispositif (4) de commande de direction monté libre en rotation sur un support (6) de direction et sollicitant un capteur (9) adapté pour fournir une information électrique fonction de la rotation du dispositif (4) de commande par rapport au support (6) et pour fournir cotte information à au moins un élément du véhicule en rupture mécanique avec le support (6) et le dispositif (4) de commande, ledit système comportant un coussin gonflable (5) de sécurité monté sur le dispositif (4) de commande et fixé sur le support (6) de direction, **caracterisé en ce qu**'il comporte en outre des moyens (7) de retour d'efforts aptes à appliquer des efforts sur le dispositif (4) de commande, et des moyens (8) formant bloc de commutations, le capteur (9), les moyens de retour d'efforts (7) et les moyens (8) formant bloc de commutation étant empilés sur une pièce (31) de sollicitation solidaire du dispositif de commande (4).

2. Système selon la revendication 1, **caractérisé en ce que** le coussin gonflable (5) est solidaire d'une extrémité d'un arbre (3), l'autre extrémité de l'arbre (3) étant solidaire d'une pièce (32) fixée sur le support (6), le dispositif (4) de commande étant solidaire de la pièce (31) de sollicitation du capteur (9) montée en rotation autour de l'arbre (3).

3. Système selon l'une des revendications 1 ou 2, **caractérisé en ce que** la pièce (31) de sollicitation comporte une forme sensiblement tubulaire, au moins un roulement (2) étant apte à permettre la rotation entre l'arbre (3) et la pièce (31) de sollicitation.

4. Système selon l'une des revendications 1 à 3, **caractérisé en ce que** l'extrémité de l'arbre (3) opposée au coussin gonflable (5) comporte un alésage (106) complémentaire de moyens (105) de fixation sur la pièce (32) fixée sur le support (6).

5. Système selon l'une des revendications 1 à 4, **caractérisé en ce que** le bloc (8) de commutations est apte à commander différents feux du véhicule et/ou des indicateurs de changement de direction du véhicule et/ou des moyens aptes à nettoyer un pare brise du véhicule.

6. Système selon la revendication 5, **caractérisé en ce que** le bloc (8) de commande comporte une forme solidaire de la pièce (31) de sollicitation apte à commander la position d'un levier de changement de direction en fonction des mouvements du dispositif (4) de commande de direction.

7. Système selon l'une des revendications 1 à 6, **caractérisé en ce que** le support comporte des moyens (100) aptes à régler la position, par rapport au support (6), de l'axe de rotation du dispositif (4) de commande de direction.

8. Système selon l'une des revendications 1 à 7, **caractérisé en ce que** le dispositif (4) de commande de direction est un volant pris en sandwich entre le coussin gonflable (5) de sécurité et le support (6) de commande de direction.

## Claims

1. A vehicle electromechanical system including a steering control device (4) mounted so as to rotate freely on a steering support (6) and actuating a suitable sensor (9) in order to provide electric information depending on the rotation of the control device (4) relatively to the support (6) and for providing this information to at least one element of the vehicle without direct mechanical linking with the support (6) and the control device (4), said system including an airbag (5), mounted on the control device (4) and fixed on the steering support (6) **characterized in that** it further includes force-reversing means (7) capable of applying forces on the control device (4) and means (8) forming a switching block, the sensor (9), the force-reversing means (7) and the means (8) forming a switching block being stacked on an actuation part (31) integral with the steering device (4).

2. The system according to claim 1, **characterized in that** the airbag (5) is integral with an end of a shaft (3), the other end of the shaft (3) being integral with a part (32) attached on the support (6), the control device (4) being integral with the actuation part (31) of the sensor (9) rotatably mounted around the shaft (3).

3. The system according to any of claims 1 or 2, **characterized in that** the actuation part (31) includes a substantially tubular shape, at least one rolling bearing (2) being able to allow rotation between the shaft (3) and the actuation part (31).

4. The system according to any of claims 1 to 3, **characterized in that** the end of the shaft (3) opposite to the airbag (5) includes a complementary bore (106) of attachment means (105) on the part (32) attached on the support (6).

5. The system according to any of claims 1 to 4, **characterized in that** the switching block (8) is capable of controlling different lights of the vehicle and/or direction-changing indicators of the vehicle and/or means capable of cleaning a windscreen of the vehicle.

6. The system according to claim 5, **characterized in that** the control block (8) includes a shape integral with the actuation part (31) capable of controlling the position of a direction-changing lever depending on the movements of the steering control device (4).

7. The system according to any of claims 1 to 6, **characterized in that** the support includes means (100) capable of adjusting the position relatively to the support (6) of the axis of rotation of the steering control device (4).

8. The system according to any of claims 1 to 7, **characterized in that** the steering control device (4) is a wheel sandwiched between the airbag (5) and the steering control support (6).

## Patentansprüche

1. Elektromechanisches Fahrzeugsystem, das eine auf einem Lenkungsbock (6) frei drehend befestigte Lenkanlagenvorrichtung (4) umfasst und einen Sensor (9) beansprucht, der geeignet ist, eine elektrische Information in Abhängigkeit der Drehung der Lenkvorrichtung (4) im Verhältnis zum Bock (6) zur Verfügung zu stellen und diese Information mindestens einem Fahrzeugelement in mechanischem Bruch mit dem Bock (6) und der Lenkvorrichtung (4) zu liefern, wobei das System einen aufblasbaren Sicherheitssack (5) umfasst, der auf der Lenkvorrichtung (4) befestigt und auf dem Lenkungsbock (6) fixiert ist, **dadurch gekennzeichnet, dass** es weiterhin Mittel (7) zur Kraftumkehr umfasst, die imstande sind, Kräfte auf die Lenkvorrichtung (4) auszuüben, und Mittel (8), die einen Umschaltblock bilden, wobei der Sensor (9), die Mittel zur Kraftumkehr (7) und die Mittel (8), die den Umschaltblock bilden, auf einem Beanspruchungsteil (31) gestapelt sind, das mit der Lenkvorrichtung (4) verbunden ist.

2. System nach Anspruch 1, **dadurch gekennzeichnet, dass** der aufblasbare Sack (5) mit einem Ende einer Welle (3) verbunden ist, wobei das andere Ende der Welle (3) mit einem Teil (32) verbunden ist, das auf dem Bock (6) fixiert ist, wobei die Lenkvorrichtung (4) mit dem Teil (31) zur Beanspruchung des Sensors (9) verbunden ist, das um die Welle (3) drehend befestigt ist.

3. System nach einem der Ansprüche 1 oder 2, **dadurch gekennzeichnet, dass** das Beanspruchungsteil (31) eine etwa röhrenförmige Form aufweist, wobei mindestens ein Lager (2) imstande ist, die Drehung zwischen der Welle (3) und dem Beanspruchungsteil (31) zu erlauben.

4. System nach einem der Ansprüche 1 bis 3, **dadurch gekennzeichnet, dass** das dem aufblasbaren Sack (5) gegenüberliegende Ende der Welle (3) eine zusätzliche Bohrung (106) von Fixiermitteln (105) auf dem Teil (32), das auf dem Bock (6) fixiert ist, aufweist.

5. System nach einem der Ansprüche 1 bis 4, **dadurch gekennzeichnet, dass** der Umschaltblock (8) imstande ist, verschiedene Leuchten des Fahrzeugs zu steuern und/oder die Anzeigen der Änderung der Richtung des Fahrzeugs und/oder Mittel, die imstande sind, eine Windschutzscheibe des Fahrzeugs zu reinigen.

6. System nach Anspruch 5, **dadurch gekennzeichnet, dass** der Steuerblock (8) eine gemeinsame Form mit dem Beanspruchungsteil (31) aufweist, das imstande ist, die Stellung eines Hebels zur Änderung der Richtung in Abhängigkeit der Bewegungen der Lenkanlagenvorrichtung (4) zu steuern.

7. System nach einem der Ansprüche 1 bis 6, **dadurch gekennzeichnet, dass** der Bock Mittel (100) umfasst, die imstande sind, die Stellung der Drehachse der Lenkanlagenvorrichtung (4) im Verhältnis zum Bock (6) zu regeln.

8. System nach einem der Ansprüche 1 bis 7, **dadurch gekennzeichnet, dass** die Lenkanlagenvorrichtung (4) ein Lenkrad in Sandwichstellung zwischen dem aufblasbaren Sicherheitssack (5) und dem Lenkungsbock (6) ist.
